# EUROPÄISCHE PATENTSCHRIFT

(11) **EP 1 992 439 B1**
(45) Veröffentlichungstag und Bekanntmachung des Hinweises auf die Patenterteilung: **13.07.2011**
(21) Anmeldenummer: 08008527.7
(22) Anmeldetag: 06.05.2008
(51) Int. Cl.: B23F 17/00, B23F 23/12, B23F 5/02, B23F 23/02, B23F 23/04

(54) **Hartfeinbearbeitungsmaschine**
Precision grinding machine
Machine de traitement dur fin

(30) Priorität: 12.05.2007 DE 102007022603
(43) Veröffentlichungstag der Anmeldung: 19.11.2008
(73) Patentinhaber: Kapp GmbH, 96450 Coburg (DE)
(72) Erfinder: Weiss, Bernd, 96472 Rödental (DE); Wölfel, Friedrich, 96450 Coburg (DE)
(74) Vertreter: Gosdin, Michael

(56) Entgegenhaltungen:
- EP-A- 0 904 878
- DE-A1- 19 857 592
- DE-A1- 19 910 746
- DE-A1-102005 043 602

## Beschreibung

Die Erfindung betrifft eine Hartfeinbearbeitungsmaschine zur Hartfeinbearbeitung eines ein zu bearbeitendes Profil aufweisendes Werkstücks, wobei die Maschine mindestens ein auf mindestens einer Werkzeugspindel angeordnetes Werkzeug und einen einzigen Drehtisch mit vertikal ausgerichteter Drehachse aufweist und
wobei auf dem Drehtisch eine einzige das Werkstück tragende Werkstückspindel angeordnet ist, wobei der Drehtisch eine erste Drehposition aufweist, in der das Werkstück (2) von dem Werkzeug bearbeitbar ist und
eine zweite Drehposition aufweist, in der das Werkstück an einer ersten Be- und Entladestation von der Werkstückspindel entnehmbar oder auf diese aufspannbar ist.

Insbesondere bei der Herstellung von Zahnrädern oder Werkstücken, die eine Verzahnung oder ein Profil aufweisen, kommt dem abschließenden Hartfein-Bearbeitungsprozess eine wichtige Bedeutung zu. Bei diesem werden die Zahnflanken beispielsweise einer Schleifoperation unterzogen, mit der sie auf die genaue Kontur gebracht werden.

Eine effiziente Verfahrensweise bei der Herstellung der Verzahnung ist das Wälzschleifen mit einer Schleifschnecke. Dabei steht das zu bearbeitende Zahnrad mit der Schleifschnecke im Eingriff, so dass durch das Abrasivmaterial der Schleifschnecke ein Aufmaß auf den Zahnflanken abgetragen werden kann.

Alternativ hierzu ist beispielsweise das Profilschleifverfahren bekannt, bei dem die Schleifscheibe das dem zu schleifenden Zahnprofil entsprechende Gegenprofil aufweist.

Aus der DE 198 57 592 A1 ist eine Hartfeinbearbeitungsmaschine bekannt, die mit einem Drehtisch ausgestattet ist, auf dem zwei Werkstückspindeln angeordnet sind. Der Drehtisch kann in einer Drehposition mit einem automatischen Werkstückwechselsystem zusammenwirken, über das Werkstücke zu- bzw. abgeführt werden können.

Die EP 0 904 878 A2 offenbart eine Zahnradbearbeitungsvorrichtung mit automatischer Werkstückzu- und -abführung.

Andere Lösungen werden in der DE 10 2005 043 602 A1 und in der DE 199 10 746 A1 gezeigt.

Die Praxis stellt dabei mitunter höchst unterschiedliche Anforderungen. In der Großserienfertigung sind große und größte Losgrößen hartfeinzubearbeiten. Dabei kommt einem möglichst hohen Automatisierungsgrad Bedeutung zu. Hier ist insbesondere angestrebt, dass die Nebenzeiten des Prozesses möglichst kurz werden, um eine möglichst hohe Nutzung der Maschine zu erreichen. Demgemäß ist es bekannt, Be- und Entladesysteme einzusetzen, um den Beschickungsvorgang der Maschine mit Werkstücken sowie die Entnahme fertig bearbeiteter Werkstücke zu optimieren.

Andererseits kann die Losgröße auch sehr gering sein, bis dahin, dass nur einzelne Werkstücke bzw. Werkstücke in Kleinstserien zu bearbeiten sind. Aus Wirtschaftlichkeitsgründen und namentlich aufgrund der relativ hohen Investitionskosten ist es in vielen Fällen nicht möglich, spezielle Maschinen für die diversen Aufgaben vorzuhalten. Vielmehr muss es mit möglichst wenigen Maschinen möglich sein, die diversen Fertigungsaufgaben mit unterschiedlichen Losgrößen zu bewältigen.

Der Erfindung liegt daher die **Aufgabe** zugrunde, eine Hartfeinbearbeitungsmaschine, insbesondere eine Schleifmaschine, der eingangs genannten Art so fortzubilden, dass es möglich wird, in effizienter und wirtschaftlicher Weise verschiedene Fertigungsaufgaben hinsichtlich der auftretenden Losgrößen zu bewältigen. Die Hartfeinbearbeitungsmaschine soll also möglichst universell für sehr unterschiedliche Losgrößen von Werkstücken einsetzbar sein.

Die **Lösung** dieser Aufgabe durch die Erfindung ist dadurch gekennzeichnet, dass die erste Be- und Entladestation eine Türe umfasst, die den Bearbeitungsraum der Hartfeinbearbeitungsmaschine verschließen kann, so dass vor der Hartfeinbearbeitungsmaschine in der zweiten Drehposition ein von der Türe verschließbarer Zugang zum Bearbeitungsraum der Maschine gegeben ist und dass die erste Be- und Entladestation zur manuellen Be- und Entladung der Werkstückspindel ausgebildet ist und dass der Drehtisch eine von der zweiten Drehposition verschiedene dritte Drehposition aufweist, in der das Werkstück an einer zweiten Be- und Entladestation von der Werkstückspindel entnehmbar oder auf diese aufspannbar ist, wobei vor der Hartfeinbearbeitungsmaschine in der dritten Drehposition ein Be- und Entladesystem angeordnet ist, das automatisch fertig bearbeitete Werkstücke von der Werkstückspindel entnehmen und neue zu bearbeitende Werkstücke auf die Werkstückspindel aufsetzen kann, so dass die zweite Be- und Entladestation zur automatischen Be- und Entladung der Werkstückspindel ausgebildet ist.

Besonders bevorzugt ist die zweite Drehposition zur ersten Drehposition um 90° gedreht angeordnet.

Die dritte Drehposition ist dabei vorzugsweise zur ersten Drehposition um 180° gedreht angeordnet.

Die Achse der Werkstückspindel ist bevorzugt vertikal angeordnet.

Die Hartfeinbearbeitungsmaschine ist nach einer bevorzugten Ausführungsform als Schleifmaschine ausgebildet, wobei das Werkzeug vorzugsweise ein abrichtbares Schleifwerkzeug ist und wobei auf dem Drehtisch an einer definierten Umfangsposition mindestens ein Abrichtwerkzeug angeordnet ist, das mit dem Schleifwerkzeug in Eingriff bringbar ist. Das Abrichtwerkzeug kann auf einem 1-Spindel-, auf einem 2-Spindel- oder auf einem 3-Spindel-Abrichtgerät aufgenommen sein. Demgemäß ist das Abrichtwerkzeug für ein entsprechendes Abrichtgerät ausgebildet.

Zum Abstützen wellenförmiger Werkstücke kann auf dem Drehtisch an einer definierten Umfangsposition ein Reitstock angeordnet sein.

Auf dem Drehtisch kann weiterhin an einer definierten Umfangsposition ein weiteres Abrichtwerkzeug mit einer geraden oder gebogenen Abrichtkante angeordnet sein. Besonders bevorzugt ist dabei vorgesehen, dass das weitere Abrichtwerkzeug an dem Reitstock angeordnet ist.

Das Schleifwerkzeug kann eine Profilschleifscheibe für das Schleifen eines Zahnrades im Profilschleifverfahren sein. Genauso ist es möglich, dass das Schleifwerkzeug eine ein- oder mehrgängige Schleifschnecke für das Schleifen eines Zahnrades im Wälzschleifverfahren ist.

Mit dieser Ausgestaltung wird es möglich, die Hartfeinbearbeitungsmaschine flexibel einzusetzen, was die zu bearbeitende Losgröße anbelangt. Es kann wahlweise und alternativ eine manuelle oder eine automatische Beschickung der Maschine mit Werkstücken vorgesehen werden. Insbesondere ist das beschriebene Maschinenkonzept auch für die manuelle Beladung mit schweren Werkstücken gut geeignet.

Damit sind sowohl kleine als auch große Losgrößen effizient und wirtschaftlich bearbeitbar, wobei der Investitionsaufwand in Maschinen optimiert werden kann, um insgesamt einen ökonomischen Herstellprozess zu erzielen.

In der Zeichnung ist ein Ausführungsbeispiel der Erfindung dargestellt. Es zeigen:
- Fig. 1: eine perspektivische Darstellung des Innenraums einer Hartfeinbearbeitungsmaschine in Form einer Verzahnungsschleifmaschine mit einem Drehtisch,
- Fig. 2: eine vergrößerte Darstellung des Drehtisches, von einem anderen Blickwinkel als in Fig. 1 aus gesehen,
- Fig. 3: die Draufsicht auf die Anordnung gemäß Fig. 1, wobei der Drehtisch in einer ersten Drehposition angeordnet ist,
- Fig. 4: die Draufsicht auf die Anordnung gemäß Fig. 1, wobei der Drehtisch in einer zweiten Drehposition angeordnet ist,
- Fig. 5: die Draufsicht auf die Anordnung gemäß Fig. 1, wobei der Drehtisch in einer dritten Drehposition angeordnet ist,
- Fig. 6: die Draufsicht auf die Anordnung gemäß Fig. 1, wobei der Drehtisch in einer vierten Drehposition angeordnet ist, und
- Fig.7: die Draufsicht auf die Anordnung gemäß Fig. 1, wobei der Drehtisch in einer fünften Drehposition angeordnet ist.

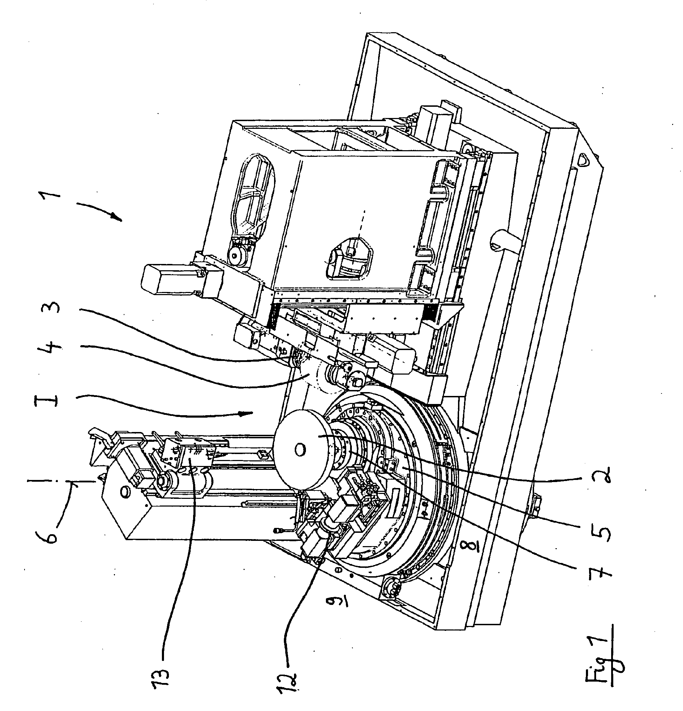

In Fig. 1 ist der Arbeitsraum einer Verzahnungsschleifmaschine 1 dargestellt, die als wesentliche Komponenten eine Werkzeugspindel 3 hat, auf der ein Schleifwerkzeug 4 - hier in Form einer Schleifschnecke - angeordnet ist, sowie einen Drehtisch 5 mit vertikaler Drehachse 6, auf dem eine Werkstückspindel 7 angeordnet ist, die ein Werkstück 2 trägt.

Wenngleich hier eine Verzahnungsschleifmaschine dargestellt ist, kann die vorliegende Erfindung auf beliebigen Hartfeinbearbeitungsmaschinen eingesetzt werden, die vorprofilierte Werkstücke 2 feinbearbeiten, wobei insbesondere, aber nicht ausschließlich an Zahnräder gedacht ist.

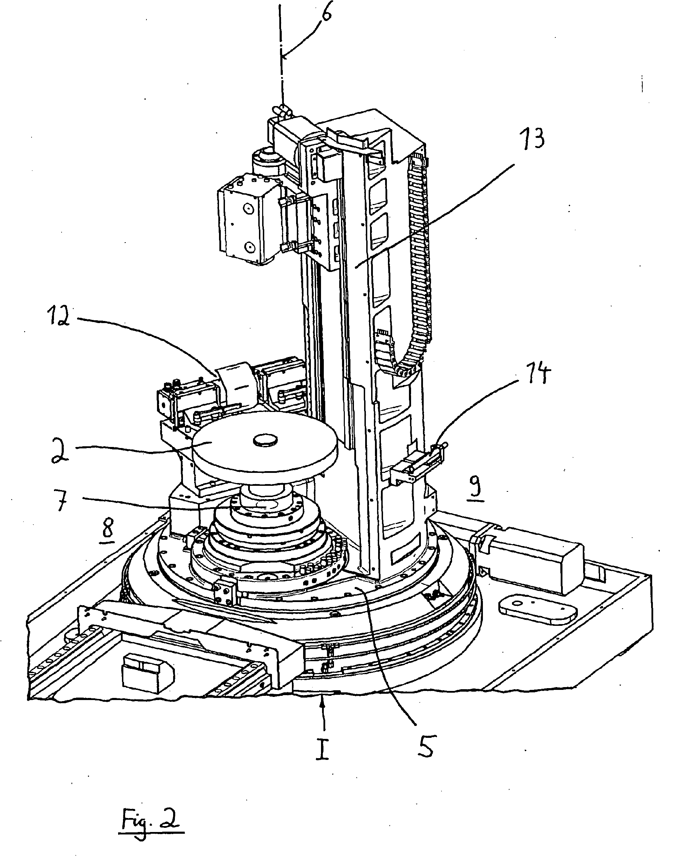

Wie am besten in Fig. 2 gesehen werden kann, weist der Drehtisch 5 mehrere Stationen auf, die durch entsprechende Drehung des Drehtisches 5 in Position bzw. in Arbeitsstellung gebracht werden können. Zum einen ist auf dem Drehtisch 5 die Werkstückspindel 7 mit vertikaler Drehachse angeordnet, wobei die Drehachse der Werkstückspindel und die Drehachse 6 des Drehtisches parallel, jedoch voneinander beabstandet sind. Durch einen entsprechenden Antrieb der Werkstückspindel 7 kann die zu bearbeitende Stelle am Außenumfang des Werkstücks 2 in ihre Bearbeitungsposition gebracht werden, was als solches hinlänglich bekannt ist. Weiterhin ist auf dem Drehtisch 5 ein Reitstock 13 angeordnet, der in ebenfalls an sich bekannter Weise dazu dient, wellenförmige Werkstücke 2 zu unterstützen.

Da im Ausführungsbeispiel ein abrichtbares Schleifwerkzeug eingesetzt wird, befindet sich auf dem Drehtisch 5 ein Abrichtwerkzeug 12. Hierbei kann es sich um eine, um zwei oder um drei Abrichtscheiben handeln, die derart an das Schleifwerkzeug 4 herangefahren werden, dass dem Werkzeug 4 ein gewünschtes Profil verliehen wird.

Am Reitstock 13 ist ein weiteres Abrichtwerkzeug 14 in Form eines Abrichtlineals angeordnet. Beim Abrichten einer Schleifschnecke kann der Kopfbereich der Schleifschnecke mittels des Abrichtlineals in einem einzigen Abricht-Arbeitsschritt komplett abgerichtet werden, wobei das Abrichtlineal parallel zur Drehachse der Schleifschnecke einen definierten Betrag radial eintaucht. Hierfür beträgt die Länge des Abrichtlineals bevorzugt mindestens die Breite des Schleifwerkzeugs 4.

Wesentlich ist, dass für den Drehtisch 5 mindestens drei verschiedene Positionen vorgesehen sind, in denen er positioniert werden kann:

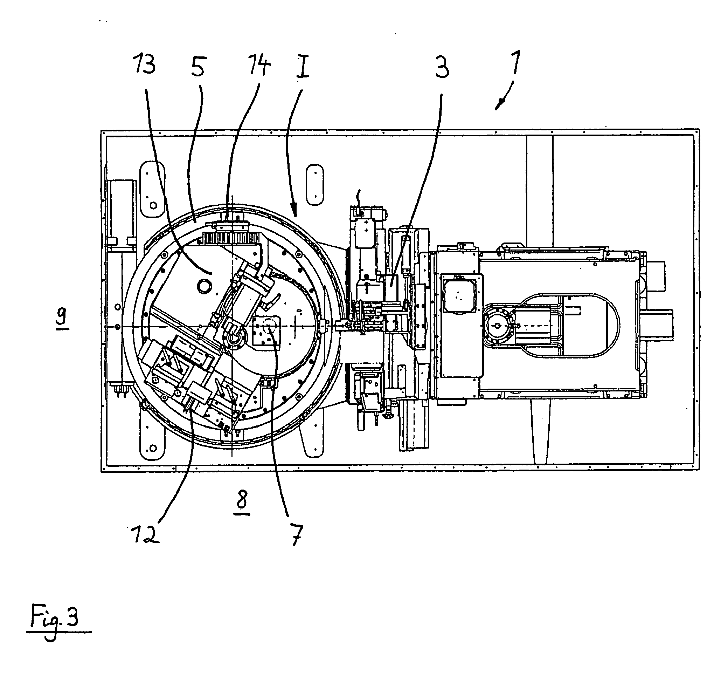

In einer ersten Drehposition I - dargestellt in Fig. 3 - ist das Werkstück 2 mit dem Schleifwerkzeug 4 bearbeitbar, d. h. es handelt sich bei dieser Position um die reguläre Arbeitsposition der Maschine.

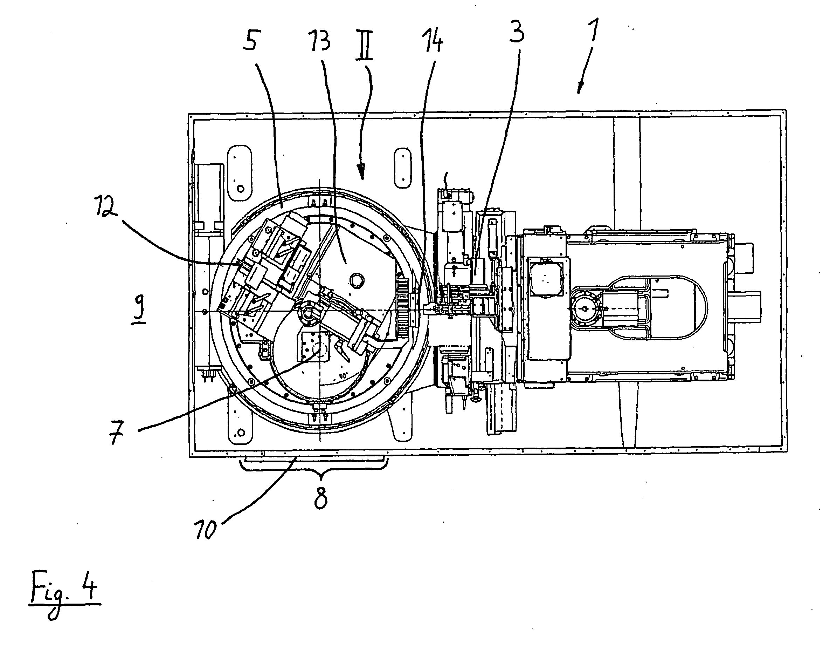

In einer zweite Drehposition II - dargestellt in Fig. 4 - befindet sich der Drehtisch 5 in einer Stellung, in der das Werkstück 2 an einer ersten Be- und Entladestation 8 der Maschine 1 von der Werkstückspindel 7 entnehmbar oder auf diese aufspannbar ist. Der Drehtisch 5 positioniert die Werkstückspindel 7 in der Drehposition II nahe einer Türe 10, die den Arbeitsraum der Hartfeinbearbeitungsmaschine 1 verschließt. Nach dem Öffnen der Türe 10 kann das Werkstück 2 in der Drehposition II manuell entnommen bzw. ein neues Werkstück auf die Werkstückspindel 7 aufgesetzt werden.

Aufgrund der Anordnung des Reitstocks 13 mit Abrichtlineal 14 (Kopfabrichter) kann in der Drehposition II im Übrigen auch der Kopf der Schleifschnecke abgerichtet werden.

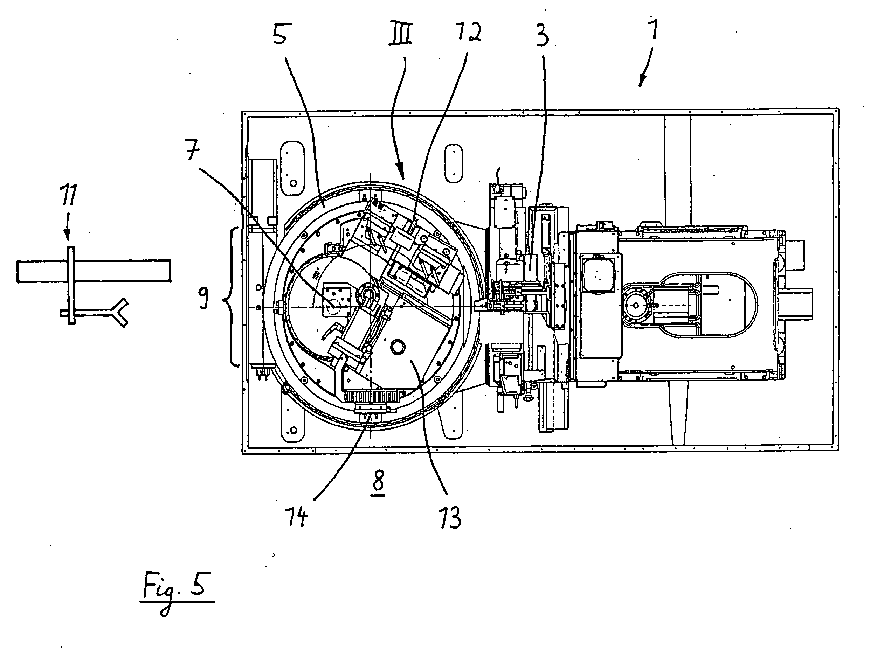

In einer dritten Drehposition III - dargestellt in Fig. 5 - befindet sich der Drehtisch 5 in einer Stellung, in der das Werkstück 2 an einer zweiten Be- und Entladestation 9 der Maschine 1 von der Werkstückspindel 7 entnehmbar oder auf diese aufspannbar ist. Der Drehtisch 5 positioniert die Werkstückspindel 7 in der Drehposition III in einem seitlichen Bereich der Maschine 1. Hier ist ein Be- und Entladesystem 11 platziert, das automatisch fertig bearbeitete Werkstücke 2 von der Werkstückspindel 7 entnimmt und neue zu bearbeitende Werkstücke auf die Spindel 7 aufsetzt.

In der dritten Drehposition III ist es im Übrigen auch möglich, über die erste Be- und Entladestation 8 das weitere Abrichtwerkzeug (Abrichtlineal) zu rüsten.

Damit wird ersichtlich, dass je nach maschinensteuerungstechnischer Ansteuerung des Antriebs des Drehtisches 5 wahlweise entweder die erste Be- und Entladestation 8 angefahren wird, um das Werkstück manuell zu handhaben, oder die zweite Be- und Entladestation 9 angefahren wird, um eine vollautomatische Handhabung der Werkstücke vorzunehmen.

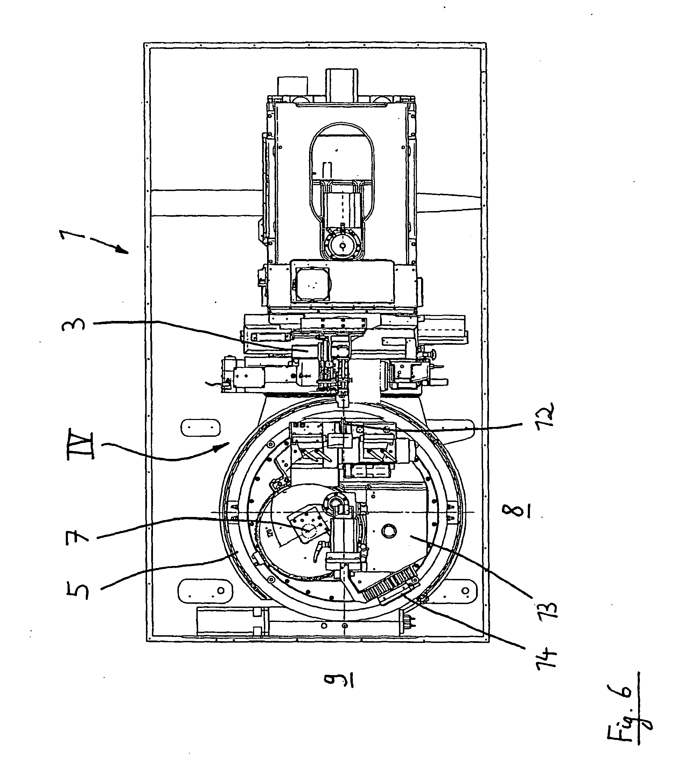

Eine weitere mögliche, vierte Drehposition IV ist in Fig. 6 zu sehen. Hier ist das Abrichtwerkzeug 12 in Position gebracht, um das Schleifwerkzeug abzurichten.

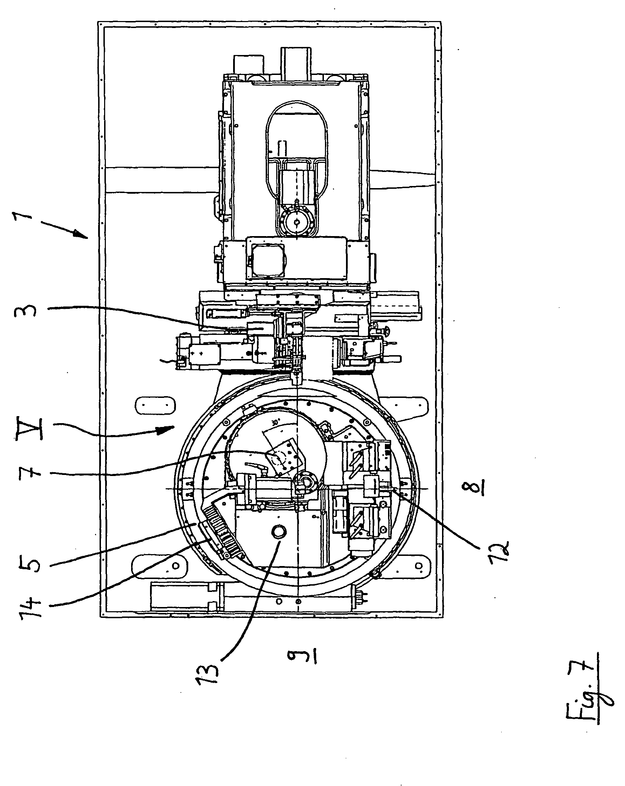

Die in Fig. 7 dargestellt mögliche fünfte Drehposition V dient dazu, das Abrichtwerkzeug 12 an der ersten Be- und Entladestation 8 zu rüsten.

### Bezugszeichenliste:

- 1: Hartfeinbearbeitungsmaschine (Schleifmaschine)
- 2: Werkstück
- 3: Werkzeugspindel
- 4: Werkzeug (Schleifwerkzeug)
- 5: Drehtisch
- 6: Drehachse
- 7: Werkstückspindel
- 8: erste Be- und Entladestation
- 9: zweite Be- und Entladestation
- 10: Türe
- 11: Be- und Entladesystem
- 12: Abrichtwerkzeug
- 13: Reitstock
- 14: weiteres Abrichtwerkzeug (Abrichtlineal)

- I: erste Drehposition
- II: zweite Drehposition
- III: dritte Drehposition
- IV: vierte Drehposition
- V: fünfte Drehposition

## Patentansprüche

1. Hartfeinbearbeitungsmaschine (1) zur Hartfeinbearbeitung eines ein zu bearbeitendes Profil aufweisendes Werkstücks (2), wobei die Maschine mindestens ein auf mindestens einer Werkzeugspindel (3) angeordnetes Werkzeug (4) und einen einzigen Drehtisch (5) mit vertikal ausgerichteter Drehachse (6) aufweist und wobei auf dem Drehtisch (5) eine einzige das Werkstück (2) tragende Werkstückspindel (7) angeordnet ist, wobei der Drehtisch (5) eine erste Drehposition (I) aufweist, in der das Werkstück (2) von dem Werkzeug (4) bearbeitbar ist und
eine zweite Drehposition (II) aufweist, in der das Werkstück an einer ersten Be- und Entladestation (8) von der Werkstückspindel (7) entnehmbar oder auf diese aufspannbar ist, **dadurch gekennzeichnet, dass** die erste Be- und Entladestation (8) eine Türe (10) umfasst, die den Bearbeitungsraum der Hartfeinbearbeitungsmaschine (1) verschließen kann, so dass vor der Hartfeinbearbeitungsmaschine (1) in der zweiten Drehposition (II) ein von der Türe (10) verschließbarer Zugang zum Bearbeitungsraum der Maschine gegeben ist und dass die erste Be- und Entladestation (8) zur manuellen Be- und Entladung der Werkstückspindel (7) ausgebildet ist und
dass der Drehtisch (5) eine von der zweiten Drehposition (II) verschiedene dritte Drehposition (III) aufweist, in der das Werkstück (2) an einer zweiten Be- und Entladestation (9) von der Werkstückspindel (7) entnehmbar oder auf diese aufspannbar ist, wobei vor der Hartfeinbearbeitungsmaschine (1) in der dritten Drehposition (III) ein Be- und Entladesystem (11) angeordnet ist, das automatisch fertig bearbeitete Werkstücke (2) von der Werkstückspindel (7) entnehmen und neue zu bearbeitende Werkstücke auf die Werkstückspindel (7) aufsetzen kann, so dass die zweite Be- und Entladestation (9) zur automatischen Be- und Entladung der Werkstückspindel (7) ausgebildet ist.

2. Hartfeinbearbeitungsmaschine nach Anspruch 1, **dadurch gekennzeichnet, dass** die zweite Drehposition (II) zur ersten Drehposition (I) um 90° gedreht angeordnet ist.

3. Hartfeinbearbeitungsmaschine nach Anspruch 1 oder 2, **dadurch gekennzeichnet, dass** die dritte Drehposition (III) zur ersten Drehposition (I) um 180° gedreht angeordnet ist.

4. Hartfeinbearbeitungsmaschine nach einem der Ansprüche 1 bis 3, **dadurch gekennzeichnet, dass** die Achse der Werkstückspindel (7) vertikal angeordnet ist.

5. Hartfeinbearbeitungsmaschine nach einem der Ansprüche 1 bis 4, **dadurch gekennzeichnet, dass** sie als Schleifmaschine ausgebildet und das Werkzeug (4) ein abrichtbares Schleifwerkzeug ist, wobei auf dem Drehtisch (5) an einer definierten Umfangsposition mindestens ein Abrichtwerkzeug (12) angeordnet ist, das mit dem Schleifwerkzeug (4) in Eingriff bringbar ist.

6. Hartfeinbearbeitungsmaschine nach Anspruch 5, **dadurch gekennzeichnet, dass** das Abrichtwerkzeug (12) auf einem 1-Spindel-Abrichtgerät, auf einem 2-Spindel-Abrichtgerät oder auf einem 3-Spindel-Abrichtgerät aufgenommen ist.

7. Hartfeinbearbeitungsmaschine nach einem der Ansprüche 1 bis 6, **dadurch gekennzeichnet, dass** auf dem Drehtisch (5) an einer definierten Umfangsposition ein Reitstock (13) angeordnet ist.

8. Hartfeinbearbeitungsmaschine nach einem der Ansprüche 5 bis 7, **dadurch gekennzeichnet, dass** auf dem Drehtisch (5) an einer definierten Umfangsposition ein weiteres Abrichtwerkzeug (14) mit einer geraden oder gebogenen Abrichtkante angeordnet ist.

9. Hartfeinbearbeitungsmaschine nach Anspruch 7 und 8, **dadurch gekennzeichnet, dass** das weitere Abrichtwerkzeug (14) an dem Reitstock (13) angeordnet ist.

10. Hartfeinbearbeitungsmaschine nach einem der Ansprüche 5 bis 9, **dadurch gekennzeichnet, dass** das Schleifwerkzeug (4) eine Profilschleifscheibe für das Schleifen eines Zahnrades im Profilschleifverfahren ist.

11. Hartfeinbearbeitungsmaschine nach einem der Ansprüche 5 bis 9, **dadurch gekennzeichnet, dass** das Schleifwerkzeug (4) eine ein- oder mehrgängige Schleifschnecke für das Schleifen eines Zahnrades im Wälzschleifverfahren ist.

## Claims

1. Hard finishing machine (1) for hard finishing of a workpiece (2) which has a profile to be machined, wherein the machine has at least one tool (4) which is arranged on at least one tool spindle (3) and a single rotary table (5) with an axis of rotation (6) which is aligned vertically and wherein a single workpiece spindle (7) is arranged on the rotary table (5) which carries the workpiece (2), wherein the rotary table (5) has a first rotational position (I) in which the workpiece (2) can be machined by the tool (4) and has a second rotational position (II) in which the workpiece can be taken from or loaded on the workpiece spindle (7) at a first loading and unloading station (8),
**characterized in**
**that** the first loading and unloading station (8) comprises a door (10) which can close the machining chamber of the hard finishing machine (1) so that in front of the hard finishing machine (1) a closable entrance to the machining chamber is provided by the door (10) in the second rotational position (II) and that the first loading and unloading station (8) is designed for manually loading and unloading of the workpiece spindle (7) and that the rotary table (5) has a third rotational position (III) which is different from the second rotational position (II) in which the workpiece (2) can be taken from or loaded on the workpiece spindle (7) at a second loading and unloading station (9), wherein a loading and unloading system (11) is arranged in front of the hard finishing machine (1) in the third rotational position (III) which automatically can unload finished workpieces (2) from the workpiece spindle (7) and can load new workpieces to be machined on the workpiece spindle (7) so that the second loading and unloading station (9) is designed for an automatic loading and unloading of the workpiece spindle (7).

2. Hard finishing machine according to claim 1, **characterized in that** the second rotational position (II) is pivoted relatively to the first rotational position (I) by 90°.

3. Hard finishing machine according to claim 1 or 2, **characterized in that** the third rotational position (III) is pivoted relatively to the first rotational position (I) by 180°.

4. Hard finishing machine according to one of claims 1 till 3, **characterized in that** the axis of the workpiece spindle (7) is arranged vertically.

5. Hard finishing machine according to one of claims 1 till 4, **characterized in that** it is a grinding machine and the tool (4) is a dressable grinding tool, wherein at a defined circumferential position of the rotary table (5) at least on dressing tool (12) is arranged which can be brought into engagement with the grinding tool (4).

6. Hard finishing machine according to claim 5, **characterized in that** the dressing tool (12) is arranged on a one-spindle dressing device, on a two-spindle dressing device, or on a three-spindle dressing device.

7. Hard finishing machine according to one of claims 1 till 6, **characterized in that** a tailstock (13) is arranged on the rotary table (5) at a defined circumferential position.

8. Hard finishing machine according to one of claims 5 till 7, **characterized in that** a further dressing tool (14) with a straight or arcuated dressing edge is arranged on the rotary table (5) at a defined circumferential position.

9. Hard finishing machine according to claims 7 and 8, **characterized in that** the further dressing tool (14) is arranged on the tailstock (13).

10. Hard finishing machine according to one of claims 5 till 9, **characterized in that** the grinding tool (4) is a profile grinding wheel for the grinding of a gear by the method of profile grinding.

11. Hard finishing machine according to one of claims 5 till 9, **characterized in that** the grinding tool (4) is a single-thread or a multiple-thread grinding worm for grinding of a gear by the method of generative grinding.

## Revendications

1. Machine d'usinage dur et fin (1) pour l'usinage dur et fin d'une pièce (2) présentant un profil à usiner, la machine présentant au moins un outil (4) disposé sur au moins une broche d'outil (3) et une table rotative unique (5) avec un axe de rotation (6) orienté verticalement, et une broche porte-pièce (7) unique portant la pièce (2) étant disposée sur la table rotative (5),
la table rotative (5) présentant une première position de rotation (I) dans laquelle la pièce (2) peut être usinée par l'outil (4), et une deuxième position (II) dans laquelle la pièce peut être enlevée de la broche porte-pièce (7) ou serrée sur celle-ci au niveau d'un premier poste de chargement et de déchargement (8),
**caractérisée en ce que**
le premier poste de chargement et de déchargement (8) comprend une porte (10) qui peut fermer l'espace d'usinage de la machine d'usinage dur et fin (1), de sorte qu'un accès à l'espace d'usinage de la machine, pouvant être fermé par la porte (10), soit disponible devant la machine d'usinage dur et fin (1) dans la deuxième position de rotation (II), et **en ce que** le premier poste de chargement et de déchargement (8) est réalisé pour charger et décharger manuellement la broche porte-pièce (7), et
**en ce que** la table rotative (5) présente une troisième position de rotation (III) différente de la deuxième position de rotation (II), dans laquelle la pièce (2) peut être enlevée de la broche porte-pièce (7) ou serrée sur celle-ci au niveau d'un deuxième poste de chargement et de déchargement (9), un système de chargement et de déchargement (11) étant disposé devant la machine d'usinage dur et fin (1) dans la troisième position de rotation (III), lequel peut enlever automatiquement des pièces usinées finies (2) de la broche porte-pièce (7) et placer de nouvelles pièces à usiner sur 1a broche porte-pièce (7), de sorte que le deuxième poste de chargement et de déchargement (9) soit réalisé pour un chargement et un déchargement automatique de la broche porte-pièce (7).

2. Machine d'usinage dur et fin selon la revendication 1, **caractérisée en ce que** la deuxième position de rotation (II) est disposée de manière tournée de 90° par rapport à la première position de rotation (I).

3. Machine d'usinage dur et fin selon la revendication 1 ou 2, **caractérisée en ce que** la troisième position de rotation (III) est disposée de manière tournée de 180° par rapport à la première position de rotation (I).

4. Machine d'usinage dur et fin selon l'une quelconque des revendications 1 à 3, **caractérisée en ce que** l'axe de la broche porte-pièce (7) est disposé verticalement.

5. Machine d'usinage dur et fin selon l'une quelconque des revendications 1 à 4, **caractérisée en ce qu'**elle est réalisée sous forme de meule et l'outil (4) est un outil de meulage dressable, au moins un outil de dressage (12) étant disposé sur la table rotative (5) au niveau d'une position périphérique définie, lequel peut être amené en prise avec l'outil de meulage (4).

6. Machine d'usinage dur et fin selon la revendication 5, **caractérisée en ce que** l'outil de dressage (12) est reçu sur un appareil de dressage à 1 broche, sur un appareil de dressage à 2 broches ou sur un appareil de dressage à 3 broches.

7. Machine d'usinage dur et fin selon l'une quelconque des revendications 1 à 6, **caractérisée en ce qu'**une poupée mobile (13) est disposée sur la table rotative (5) au niveau de la position périphérique définie.

8. Machine d'usinage dur et fin selon l'une quelconque des revendications 5 à 7,
**caractérisée en ce qu'**un outil de dressage supplémentaire (14) avec une arête de dressage droite ou courbe est disposé sur la table rotative (5) au niveau d'une position périphérique définie.

9. Machine d'usinage dur et fin selon les revendications 7 et 8, **caractérisée en ce que** l'outil de dressage supplémentaire (14) est disposé sur la poupée mobile (13).

10. Machine d'usinage dur et fin selon l'une quelconque des revendications 5 à 9, **caractérisée en ce que** l'outil de meulage (4) est une meule à profil pour meuler une roue dentée dans un procédé de meulage à profil.

11. Machine d'usinage dur et fin selon l'une quelconque des revendications 5 à 9, **caractérisée en ce que** l'outil de meulage (4) est une vis sans fin de meulage à un ou plusieurs pas, pour meuler une roue dentée dans un procédé de meulage par génération.
